# EUROPEAN PATENT SPECIFICATION

(11) **EP 3 246 978 B1**
(45) Date of publication and mention of the grant of the patent: **02.09.2020**
(21) Application number: 17171632.7
(22) Date of filing: 18.05.2017
(51) Int. Cl.: H01M 10/04, H01M 10/653, H01M 10/647, H01M 10/6551, H01M 10/6557, H01M 10/6555, H01M 10/613

(54) **A BATTERY MODULE, COMPONENTS AND A METHOD**
BATTERIEMODUL, BAUTEILE UND VERFAHREN
MODULE DE BATTERIE, COMPOSANTS ET PROCÉDÉ DE BATTERIE

(30) Priority: 19.05.2016 FI 20165422
(43) Date of publication of application: 22.11.2017
(73) Proprietor: Valmet Automotive Oy, 23501 Uusikaupunki (FI)
(72) Inventor: Kopra, Lasse, 23501 Uusikaupunki (FI); Kelkka, Juuso, 23501 Uusikaupunki (FI)
(74) Representative: Papula Oy

(56) References cited:
- DE-A1-102014 211 821
- JP-A- 2015 210 895
- US-A1- 2011 052 960
- US-A1- 2012 003 522
- US-A1- 2016 049 703

## Description

### TECHNICAL FIELD

The present invention relates to a battery module and to a method of assembling a battery module.

### BACKGROUND OF THE INVENTION

The operational life of rechargeable battery cells depends to a large extent on the temperature of the battery cells during their life, and especially during use. To obtain the longest possible operational life the operating temperature of the battery cells should be maintained on a certain level, or within a certain temperature range. Due to electrical resistance, recharging or discharging battery cells creates thermal energy, which has to be conducted away from the cells as effectively as possible to maintain the battery cell temperature close to optimum. The thermal energy produced during recharging or discharging depends on the speed of recharging and discharging: the faster the process, the more thermal energy is produced.

Further, in some situations it must be possible to warm up the battery cells in order to get them to a desired operating temperature at the beginning of use.

The battery cells should also be protected against damages and deformation. When damaged, the battery cells may short-circuit, which may lead to an uncontrolled electric discharge resulting in a fire or an explosion. If possible, the deformation of battery cells should be prevented by a safe structure which takes various accident situations into account.

Thermal management of battery modules is known from, for example, WO 2014/184419 A1, in which a system for packaging and thermal management of battery cells in a battery module is disclosed. The system is characterized in that the battery module comprises at least one extruded aluminum or aluminum alloy profile provided with a plurality of thermal transfer fins arranged at a space from each other. A plurality of battery cells is mounted in said at least one profile in thermal contact with the thermal transfer fins. Thermal transfer medium is arranged in thermal contact with said at least one profile so that thermal energy is conducted through said aluminum or aluminum alloy profile from/to the battery cells to/from said thermal transfer fluid.

In document DE 10 2012 214964 A1, a battery cell comprising an electrically conducting housing and an electrically insulating insulation layer adhering to the battery cell housing is disclosed. The insulation layer comprises two layers, the first of which is electrically insulating, and the second of which is positioned on the side of the first layer facing away from the battery cell and comprising fibers oriented in multiple spatial directions or a film. Alternatively, the insulation layer comprises a matrix and fibers embedded in the matrix, wherein the matrix adheres directly on the battery cell housing.

In document DE 10 2014 211821 A1, a battery cell with a battery cell housing and an electrically isolating coating that covers the battery cell housing at least partially are disclosed. The coating has a variable thickness at least in the area of the large side of the battery cell housing.

In document US 2011/052960 A1 it is disclosed a battery module comprising a cooling block having slots between hollow cooling fins into which batteries are inserted. An electrically insulating and thermally conductive film is disposed between the battery cells and the cooling fins.

In document US 2012/003522 A1 it is disclosed a battery module comprising a cooling block having slots between cooling fins into which batteries are inserted. The fins have rounded edges, and may have a tapered shape, both of which would allow for easy insertion of the cells into the spaces between the cooling fins.

In document JP 2015 210895 A it is disclosed a battery module comprising a cooling block having slots between cooling fins into which batteries are inserted. Each battery is inserted into an electrically insulating and thermally conductive sheath.

In document US 2016/049703 A1 it is disclosed a battery module comprising a cooling block having slots between hollow cooling fins into which batteries are inserted. An electrically insulating and thermally conductive epoxy filler is disposed between the battery cells and the cooling fins.

### SUMMARY OF THE INVENTION

The battery module according to the present disclosure is characterized by what is presented in claim 1.

The method according to the present disclosure is characterized by what is presented in claim 9.

The objective of the invention is to alleviate at least one of the disadvantages of prior-art solutions.

An advantage of the battery module according to the present disclosure is that temperature regulation of the battery cells may be improved over prior-art solutions. Especially, the changes in temperature of the battery cells can be responded to, or brought about, faster in comparison to prior-art solutions. In other words the dynamics of the temperature control are improved.

Thus, the operational life of the battery cells may be extended severalfold. Also the number of recharge/discharge cycles may increase.

Another advantage is that the deformation of battery cells in a battery module might be reduced. The mechanical resistance of the battery cells might be increased. For example shaking of vibration may speed up the ageing of the battery cells, and this effect might be reduced in the battery module according to the present disclosure.

Another advantage is that the life of the battery cells may be increased.

Yet another advantage is that it might be possible to recharge and discharge the battery cells faster, while remaining sufficiently close to the optimal temperature.

Yet another advantage is that close contact between the battery cells and the cooling elements can be achieved with few components. This might simplify the construction of the battery module, leading to cost and time savings.

### BRIEF DESCRIPTION OF THE DRAWINGS

The accompanying drawings, which are included to provide a further understanding of the disclosure and constitute a part of this specification, illustrate embodiments and together with the description help to explain the principles of the disclosure. In the drawings:
Figure 1A depicts a prismatic lithium ion battery cell used in a battery module according to the present disclosure.
Figure 1B presents a cross section of a metal profile for receiving battery cells.
Figure 2 shows a battery module comprising a plurality of battery cells and a metal profile.
Figure 3, panels A to D, depicts embodiments of a battery cell according to the present disclosure as partial cross-sectional views.
Figure 4, panels A to D, depicts embodiments of a metal profile according to the present disclosure as partial cross-sectional views.
Figure 5 depicts an embodiment of the method of assembling a battery module according to the present disclosure.

### DETAILED DESCRIPTION

The battery module, the battery cell and the metal profile according to the present disclosure may be used in any applications utilizing battery cells. For example, they can be used in fully or partly electricity-powered vehicles, such as land vehicles, ships and airplanes. Additionally, they can be used in stationary electricity sources, such as reserve power sources.

In one aspect, a battery module comprising a metal profile, the metal profile being provided with a plurality of thermal transfer fins arranged at a space from each other, and a plurality of battery cells mounted in said metal profile in thermal contact with the thermal transfer fins is disclosed. The battery module is characterized in that the thermal transfer fins are configured to exert pressure on the battery cells, and in that the thermal contact between the thermal transfer fins and the battery cells is at least partly mediated by heat-conducting filler material and electrically insulating material positioned between the thermal transfer fins and the battery cells for improving thermal transfer between the battery cells and the thermal transfer fins.

In another aspect, a battery cell for a battery module, arranged to be mounted between thermal transfer fins of a metal profile for being in thermal contact with the thermal transfer fins is disclosed. The battery cell is characterized in that the battery cell is configured to receive pressure from the thermal transfer fins, and in that the thermal contact between the thermal transfer fins and the battery cells is at least partly mediatable by heat-conducting filler material and electrically insulating material positioned between the thermal transfer fins and the battery cells. In an embodiment, the battery cells are prismatic battery cells.

In yet another aspect, a metal profile provided with a plurality of thermal transfer fins arranged at a space from each other for receiving battery cells therebetween is disclosed. The metal profile is characterized in that the thermal transfer fins are configured to exert pressure on the battery cells, and in that the thermal contact between the thermal transfer fins and the battery cells is at least partly mediatable by heat-conducting filler material and electrically insulating material positioned between the thermal transfer fins and the battery cells.

The battery module according to the present disclosure thus comprises a metal profile and a plurality of battery cells. The battery module further comprises electrically insulating material and heat-conducting filler material. In some embodiments, the battery module further comprises distance-adjusting means.

The metal profile comprises a plurality of thermal transfer fins, which are spaced apart. In an embodiment, the thermal transfer fins extend in parallel direction so that the space between two neighboring thermal transfer fins is a groove of even width. More than one battery cell may be fitted in one groove to form a row of battery cells. The metal profile functions as a heat sink. It dissipates heat generated during the functioning of the battery cells. However, the metal profile can also be used for heating up the battery cells.

The metal profile may further comprise a base portion from which the thermal transfer fins extend. The metal profile may further comprise a channel for thermal transfer medium. The thermal transfer medium may be, for example, fluid, gas or phase transition-based refrigerant. The metal profile may comprise further heat-exchange-improving elements, such as cooling ribs.

In an embodiment, the metal profile is made of heat-conducting metal, such as aluminum or copper. In an embodiment, the metal profile is made of extruded aluminum or aluminum alloy. In an embodiment, the metal profile comprises anodized aluminum. Anodizing might contribute to the electrical insulation between the battery cells and the metal profile. The metal profile may be one seamless piece.

The battery cells are mounted between the thermal transfer fins of the metal profile. The battery cells are in thermal contact with the thermal transfer fins. They may additionally be in thermal contact with the base portion of the metal profile. The thermal contact between the battery cells and the metal profile achieves thermal transfer between the battery cells and the metal profile. Thus, the temperature of the battery cells can be regulated through the temperature of the metal profile.

The temperature control of battery cells in a battery module benefits from good heat conductance between the battery cells and the metal profile in which the battery cells are inserted. The heat conductance depends, among other things on the material of the surfaces making contact, and on how accurately the two surfaces are in contact with each other.

In many embodiments, both the housing of the battery cell and the metal profile are made of metal having good thermal conductivity. An example of such metal is aluminum. The shapes of the metal profile and the battery cells are designed to be as close to complementary as possible. Typically, the complementary shape is effected in the cross-sectional direction. This means that the cross-sectional profile of a battery cell closely matches that of the metal profile between two thermal transfer fins. However, the manufacturing tolerances, as well as the need to be able to insert and possibly to replace the battery cells limits the degree of accuracy of matching the adjacent surfaces. Further, the surfaces of battery cells and the thermal transfer fins are not always straight, but may be convex or concave. Additionally, the surfaced may be uneven. In addition to this, the exact shape and volume of a battery cell may depend on its charging level, age and temperature. For example, lithium ion battery cells tend to swell with age. In an embodiment, the battery cells are re-chargeable lithium ion battery cells.

Consequently, there are typically always noncontact areas between a battery cell and the metal profile. Thus, the heat transfer takes place through air, which is highly inefficient.

In the battery module according to the present disclosure, the thermal transfer fins are configured to exert pressure on the battery cells. The pressure exerted on the battery cells by the thermal transfer fins might improve the thermal transfer between the thermal transfer fins and the battery cells. The pressure might improve the direct contact between the battery cell and the thermal transfer fins.

First, the complementarity of battery cell and thermal transfer fins might be improved. In other words, when the surfaces are pressed together, unevenness or curvature in the surfaces might be at least partially straightened out and the contact area of the surfaces might increase, thus improving thermal transfer.

Second, the shape and volume changes of the battery cells may be reduced or removed by exerting pressure on the battery cells. It has been observed that the swelling and shrinking of an internal electrode of a battery cell, in response to the variable charging level the battery cell, may cause micro-level damage, such as cracks, in the electrode. This can contribute to the ageing of a battery cell, and weaken the thermal performance of the battery cells during high load, since the internal resistance of the electrode material increases. In this respect, it might be advantageous if the pressure is exerted on the battery cells from several directions. When the shape changes are reduced, also the mechanic load on the electrode in the battery cell is reduced. This might prevent or reduce damage on the electrode, thus increasing its operational life.

The thermal contact between the thermal transfer fins and the battery cells according to the present disclosure is at least partly mediated by heat-conducting filler material and electrically insulating material. The heat-conducting filler material and the electrically insulating material are positioned between the thermal transfer fins and the battery cells. Together, they improve the thermal transfer between the battery cells and the thermal transfer fins, while keeping electrical insulation sufficiently high.

By heat-conducting filler material is herein meant material that conducts heat and is formable. By formable material is meant material that fills the gaps between a battery cell and the metal profile, when the thermal transfer fins are pressed against the battery cells. A part of the filler material may be pressed out from between the heat transfer fin and the battery cell, but the filler material is retained at least in the locations where surface unevenness causes gaps or pockets to remain. Without the heat-conducting filler material, air would remain in these positions. As air is a poor heat conductor, this reduces the efficiency of thermal transfer. The same applies conversely if a surface contains a slight projection. In such a case, in the surface area surrounding the projection, the heat transfer would be adversely affected. When the space is filled with filler material, the heat transfer remains satisfactory. Therefore, any material whose heat conductance exceeds that of air, may improve the thermal control of battery cells.

The heat-conducting filler material is viscous paste or a viscous gel. The viscosity of the paste is high enough to prevent the paste from oozing in the direction of gravity, when it is positioned between the battery cell and the metal profile. In such a case, the heat-conducting filler material is termed high-viscosity paste. A paste has the advantage that it remains in place until the battery cell and the metal profile are in their final positions relative to each other. The heat-conducting filler material can thus be pre-coated on either the battery cells or the metal profile. Alternatively, a solidifying liquid material can be used. In such a case, a suitable volume of the heat-conducting filler material may be poured on the bottom of the metal frame and the insertion of a battery cell will cause the filler material to spread between the battery cell and the metal profile. The material will solidify to remain in its final position after the battery module has been assembled. For example polymerizable material whose viscosity increases over time can be used.

For example, material comprising silicone, acrylic-based material, epoxy or urethane material may be used as the heat-conducting filler material. Further, the heat-conducting filler material may comprise ceramic material or metal, such as silver. Ceramic material may be, for example, aluminum oxides, aluminum nitride, zinc oxide or boron nitride. Also a combination of the above materials is possible.

It might be advantageous to keep the volume of the heat-conducting filler material small. Most suitable materials have lower heat transfer capacity than the materials used for the housing of the battery cells and the metal profile. Thus, as large amount of contact between the battery cells and the metal profile would be direct.

In one embodiment, the thickness of the heat-conducting filler material is below 1 mm when assembling the battery module. A suitable thickness of the filler material depends on the specific application, in which the battery module according to the present disclosure is used. One factor influencing the thickness of the heat-conducting filer material is the manufacturing tolerance of the metal profile and the battery cell. The smaller the tolerance, the thinner the heat-conducting filler material is.

The heat-conducting filler material may be precast or pre-coated on the battery cells or on the metal profile before assembling the battery module. The initial thickness of the heat-conducting filler material, i.e. the thickness before the assembly of the battery module, may be, for example below 1 mm.

In an embodiment, the thickness of the heat-conducting filler material may be substantially constant. Embodiments are envisaged, in which the thickness of the heat-conducting filler material varies.

Since the heat-conducting filler material will form to fill the spaces between the metal profile and the battery cells, its thickness will typically change during the assembly of the battery module. After assembly, the heat-conducting filler material may have variable thickness, and in locations where the battery cells and the metal profile are in direct contact, it may be completely absent.

In an embodiment, the heat-conducting filler material may be coated on all surfaces of a battery cell. In another embodiment, the battery cell according to the present disclosure comprises more than one face, the battery terminals are positioned on one of the faces and the heat-conducting filler material is absent from the face on which the battery terminals are located. In an embodiment, the heat-conducting filler material is positioned on all surfaces of the battery cell which are configured to make contact with the metal profile.

The battery cell and the metal profile need to be well enough electrically isolated from each other. This is challenging from the perspective of heat transfer efficiency, since good heat conductors are often also electrically conducting. In the current disclosure, electrically insulating material is used between the battery cell and the metal profile to ascertain electrical insulation during the operational life of the battery cell. The electrically insulating material may be formed of one piece or combined from several pieces.

Additionally, the electrically insulating material can be selected to have low friction. The electrically insulating material can prevent the excessive or unwanted movement of the heat-conducting filler material. In other words, the electrically insulating material can be used to avoid displacement of the heat-conducting filler material before the battery cells are inserted in the metal profile. Also during use, the electrically insulating material can hold the heat-conducting filler material in place.

In one embodiment, the thickness of the electrically insulating material is below 0.5 mm. The thickness of the electrically insulating material may be below 0.3 mm. The thickness of the electrically insulating material depends on its composition and the voltage of the battery cell, or the voltage of the battery cell string, when the battery cells are connected in series. The better the material insulates, the thinner layer is needed for achieving sufficient insulation with a given battery voltage.

The thinner the layer of electrically insulating material is, the less it interferes with the thermal transfer between the battery cell and the metal profile. Thus, as thin a layer as possible is advantageous from thermal transfer perspective.

The electrically insulating material is an electrically insulating film. Films may be described as thin continuous polymeric materials.

A number of different polymers have suitable electrically insulating properties for being used as the electrically insulating material. Advantageously, the electrically insulating material is resilient enough to withstand the tear forces especially during the assembly of the battery module.

For example polyethylene, polyesters, such as polyethylene terephthalate (PET), biaxially-oriented polyethylene terephthalate (BoPET) or polyethylene naphthalate (PEN), or a combination thereof may be used. The electrically insulating material may comprise silicone.

In an embodiment, the electrically insulating material may be coated on all surfaces of a battery cell. In another embodiment, the battery cell according to the present disclosure comprises more than one face, the battery terminals are positioned on one of the faces and the electrically insulating material is absent from the face on which the battery terminals are located. In one embodiment, the electrically insulating material is positioned on all surfaces of the battery cells which are configured to face the metal profile. The areas which are covered by the electrically insulating material are independent of the areas on which there is heat-conducting filler material. In other words, there may be electrically insulating material in areas, from which the heat-conducting filler material is absent. For example, the heat-conducting filler material may be absent from the face on which the battery terminals are positioned. However, also this face may be covered with the electrically insulating material.

In one embodiment, the battery cell comprises electrically insulating material, or the battery cell comprises heat-conducting filler material. Thus, in an embodiment, the battery cell comprises electrically insulating material. Alternatively or in addition, the battery cell may comprise heat-conducting filler material. By the battery cell comprising electrically insulating material or heat-conducting filler material is herein meant that the material or materials are fixed or attached to the exterior of the battery cells. In other words, the heat-conducting filler material is positioned exterior to the battery cell housing. Similarly, the electrically insulating material is positioned exterior to the battery cell housing. They can either adhere strongly to the battery cell or remain loose. It is possible to manufacture the battery cells comprising the electrically insulating material or the heat-conducting filler material. It is also possible to combine the materials with battery cells after manufacture.

In one embodiment, the heat-conducting filler material is coated on the battery cell and surrounded by the electrically insulating material, or the electrically insulating material is coated on the battery cell and surrounded by the heat-conducting filler material. Thus, the two materials can be positioned on the battery cell in any order. By coating is herein meant any suitable way of depositing the electrically insulating material or the heat-conducting filler material on the battery cells. For example, in an embodiment, in which the electrically insulating material is a plastic film, it may be shrink-wrapped around a battery cell. Also, it is possible that the heat-conducting filler material is first coated on the battery cell and the electrically insulating material is shrink-wrapped around the battery cell comprising the heat-conducting filler material.

In one embodiment, the metal profile comprises electrically insulating material, or the metal profile comprises a heat-conducting filler material. Thus, in an embodiment, the metal profile comprises electrically insulating material. Alternatively or in addition, the metal profile comprises heat-conducting filler material. When the metal profile comprises heat-conducting filler material or electrically insulating material, the materials are positioned on the surface of the metal profile. They can either adhere strongly to the metal profile or remain loose.

In one embodiment, the heat-conducting filler material is coated on the metal profile and covered by the electrically insulating material, or the electrically insulating material is coated on the metal profile and covered by the heat-conducting filler material.

If the electrically insulating material is coated on the metal profile, different types of spraying methods might be used, for example. It is possible that the heat-conducting filler material is deposited between the thermal transfer fins to the bottom of a groove formed therebetween. When the battery cell is positioned in the metal profile, the heat-conducting filler material is pressed away and may sufficiently cover the adjacent surfaces of the battery cells and the metal profile. In such embodiments, the metal profile might comprise spacers preventing the sideways spreading of the heat-conducting filler material.

In one embodiment, the electrically insulating material is positioned between the thermal transfer fins and the heat-conducting filler material, or the electrically insulating material is positioned between the battery cell and the heat-conducting filler material. Thus, in an embodiment, the electrically insulating material is positioned between the thermal transfer fins and the heat-conducting filler material. Correspondingly, in an embodiment, the electrically insulating material is positioned between the battery cell and the heat-conducting filler material.

In other words, the electrically insulating material and the heat-conducting filler material may be positioned between the metal profile and the battery cells in any order.

Further, it is possible that the battery cells comprise the electrically insulating material and the metal profile comprises the heat-conducting filler material. Conversely, it is possible that the metal profile comprises the electrically insulating material and the battery cells comprise the heat-conducting filler material.

In an embodiment, the electrically insulating material or the heat-conducting filler material has a surface facing the metal profile that allows the smooth insertion of the battery cells between the thermal transfer fins.

For example, the surface of the material may have low friction. The low friction allows the smooth insertion of the battery cells between the thermal transfer fins. Therefore, only the surface facing the thermal transfer fins needs to have low friction. It might also be possible to use friction-reducing agents, such as lubricants or detergents, for assisting the insertion of the battery cells into the metal profile.

In one embodiment, the thermal transfer fins comprise a tip with edges, and the edges are rounded for allowing smooth insertion of the battery cells between the thermal transfer fins. The smoothing of the edges may lead to a completely rounded tip. It is possible that the smoothing is effected in the form of slanting from the tip towards the base of the thermal transfer fin. The length and curvature of the rounding may vary.

The rounding of the edges might assist in the heat-conducting filler material spreading evenly between the battery cell and the metal profile. Additionally, the electrically insulating material might withstand the insertion more easily without rupture. The intactness of the electrically insulating material layer is important for the proper functioning and safety of the battery module. Thus, the rounding might, in turn, speed up the assembly procedure, since the handling of the electrically insulating material is less prone to damage during insertion.

In one embodiment, the thermal transfer fins are bendable for allowing smooth insertion of the battery cells between the thermal transfer fins. For example, the thickness and material may affect the bendability of the thermal transfer fins. The suitable degree of bendability depends on the application and may be determined by the skilled person for each application. The bendability of the thermal transfer fins is to be understood as spring-like behavior. This might allow the adjustability of the pressure exerted on the battery cells by the thermal transfer fins.

In one embodiment, the pressure exerted on the battery cells by the thermal transfer fins is regulated by distance-adjusting means, comprising compressing means and/or spacers. The distance-adjusting means according to the present disclosure act on the thermal transfer fins. The thermal transfer fins, again, press against the battery cells. Such arrangement might offer the advantage that the distance-adjusting means according to the present disclosure are a simple construction with relatively low number of components.

In an embodiment, the distance adjusting means comprises compressing means. A thermal transfer fin may comprise one or more openings for positioning the compressing means. There may be two or more compressing means spread across the surface of each thermal transfer fin. The compressing means may be screws or bolts. When the screws or bolts are tightened, the thermal transfer fins are pressed together. Alternatively, the compressing means may be clips pressing the thermal transfer fins together.

The compressing means may connect two adjacent thermal transfer fins. The compressing means may extend over more than two adjacent thermal transfer fins. In an embodiment, the compressing means extend through all thermal transfer fins of the metal profile. An example is a metal rod with each end threaded for receiving a tightening nut, the metal rod extending through holes in all thermal transfer fins. There may be one or more rows of compressing means. Alternatively, the compressing means can be spread across the area of the thermal transfer fins. Different configurations may be used for creating a uniform pressure along the surface of the battery cell pressed against the thermal transfer fins.

In an embodiment, the distance-adjusting means comprises spacers. The spacers may be, for example metal blocks or sheets. Alternatively, spacers may be made of elastic material. By elastic material is herein meant material whose elasticity exceeds that of metals. The spacers may comprise springs for adjusting the compressing force. The thickness of the spacers may vary according to the target pressure and spacer material. The spacers can be used to prevent excessive pressure from the thermal transfer fins on the battery cells.

The spacers may be produced with smaller tolerances than the metal profile. Thus, they may be designed to be wider than the battery cells by a predetermined value. This can be utilized in determining the amount of heat-conducting filler material needed to accurately fill the space between the metal profile and each battery cell.

The spacers may form an additional electrically barrier between the battery cells. They may additionally be thermally insulating. Alternatively, the spacers may form an additional heat-exchange surface for the battery cells. The material of the spacer can be selected to allow efficient thermal transfer between the metal profile and the battery cells. For example, the material of the spacer can be the same as the material of the metal profile. The material of the spacer may be, for example, aluminum or aluminum alloy. The material of the spacer may be, for example, plastic or plastic composite.

A spacer can be placed between two adjacent battery cells positioned between given two thermal transfer fins. The spacers may extend a substantial portion in the direction of the thermal transfer fin, from the metal profile towards the tip of the thermal transfer fin. For example, a spacer may extend from the metal profile to the tip of the thermal transfer fin (i.e. the whole depth of the groove between two neighboring thermal transfer fins). Alternatively, the spacer may extend half the distance between the metal profile and the tip of the thermal transfer fin (i.e half the depth of the groove between two neighboring thermal transfer fins).

In an embodiment, the distance-adjusting means comprises compressing means and spacers. The compressing means and spacers may be arranged to co-operate in adjusting the pressure exerted on the battery cells by the thermal transfer fins. For example, a compressing means may be a metal rod extending through all the thermal transfer fins of a metal profile. The spacers may be positioned so that the rod extends through them as well. It is also possible that the compressing means and the spacers are located at different positions along the surface of the thermal transfer fin. However, as one of the design factors for battery modules is size, it might be advantageous to minimize space that is not used by battery cells. Therefore, combining the compressing means and spacers spatially might be advantageous.

For example, the spacers may be located between two battery cells. The spacers may make contact with the battery cells for further improving the thermal transfer in the battery module. The compression means, comprising a rod, for example, may go through the spacers.

In a further aspect, a method of assembling a battery module is disclosed. The method id characterized in that the method comprises, simultaneously or in any order, the steps of
a) coating a metal profile comprising a plurality of thermal transfer fins, or coating a plurality of battery cells with heat-conducting filler material; and
b) coating a metal profile comprising a plurality of thermal transfer fins, or coating a plurality of battery cells with electrically insulating material.
The method comprises the further step c) of inserting the battery cells into the metal profile.

The method thus comprises two coating steps. One step is coating the heat-conducting filler material on the metal profile or on the battery cells, and another step is coating the electrically insulating material on the metal profile or on the battery cells. By coating a metal profile and by coating a battery cell is herein meant coating directly or indirectly on the metal profile or on the battery cell, respectively. It is thus possible that there is an intermediate layer between the metal profile or the battery cell and the material to be coated. The two coating steps may be performed in any order. It is also possible that both coating steps are performed on the battery cells or on the metal profile. Alternatively, it is possible that one step is performed on the battery cells and the other step on the metal profile. As a further alternative, the steps can be performed simultaneously. This is possible, for example, when the method comprises a further step i) before steps a) and b). At step i), the heat-conducting filler material is combined with the electrically insulating material. Then, steps a) and b) are performed simultaneously, when the heat-conducting filler material and the electrically insulating material are brought on the battery cells or on the metal profile.

Steps a) and b) are followed by step c). In step c), the battery cells are inserted into the metal profile. The result is a battery module according to the present disclosure. The insertion may take place manually, or it can be automated or semi-automated. In step c), the battery cells are typically pressed directly into the grooves between the thermal transfer fins. The shape of the thermal transfer fins may facilitate the insertion.

Glue or double-sided tape may be used to secure the battery cell into its position. The glue or the double-sided tape may be made of heat-conducting material.

For example, it is possible that the battery cells are pre-coated with an electrically insulating material, such as a plastic film (step b)). This would take place well before the coating by the heat-conducting filler material (step a)) and the assembly of the battery module (step c)). Thus, the method steps do not need to be performed immediately one after the other, or in the same place.

It is also possible that the heat-conducting filler material is first coated on the battery cell (step a)), and then, sealed with plastic film (step b)). After this, the battery cells are inserted into the metal profile (step c)).

In one embodiment, the method further comprises the step of
ii) bending two neighboring thermal transfer fins away from each other for inserting a battery cell therebetween during step c).
It might be advantageous to facilitate the insertion of the battery cells into the metal profile by bending two neighboring thermal transfer fins away from each other. The bending would be temporary and would stay within the yield limit of the material, so that the shape change will remain reversible. In other words, the elastic limit of the material is not exceeded in step ii).

After the battery cell or more than one battery cell is inserted between the thermal transfer fins, the bent thermal transfer fins are released. The thermal transfer fins will return to their original shape and exert pressure on the battery cell(s). Due to the pressure, the heat-conducting filler material will spread to conform to the shapes of the metal profile and the battery cell. Void spaces between the metal profile and the battery cells are filled, increasing the thermal transfer capacity in the battery module. For the functioning of the current invention, it is not necessary that all air is driven away from between the metal profile and the battery cells.

The method may comprise additional steps, such as adding electrical connections and packaging. Also, the pressure exerted by the thermal transfer fins on the battery cells may be regulated after the assembly of the battery module. After the battery cells are inserted into the metal profile, the compression means and/or spacers are fitted in place and the pressure adjusted with the aid of the compression means. In embodiments, in which the battery module comprises spacers, they may be placed in the metal profile already before the insertion of the battery cells in the metal profile. In such an embodiment, the method further comprises step of iii) of inserting the spacers into the metal profile between thermal transfer fins before step c).

### FIGURES

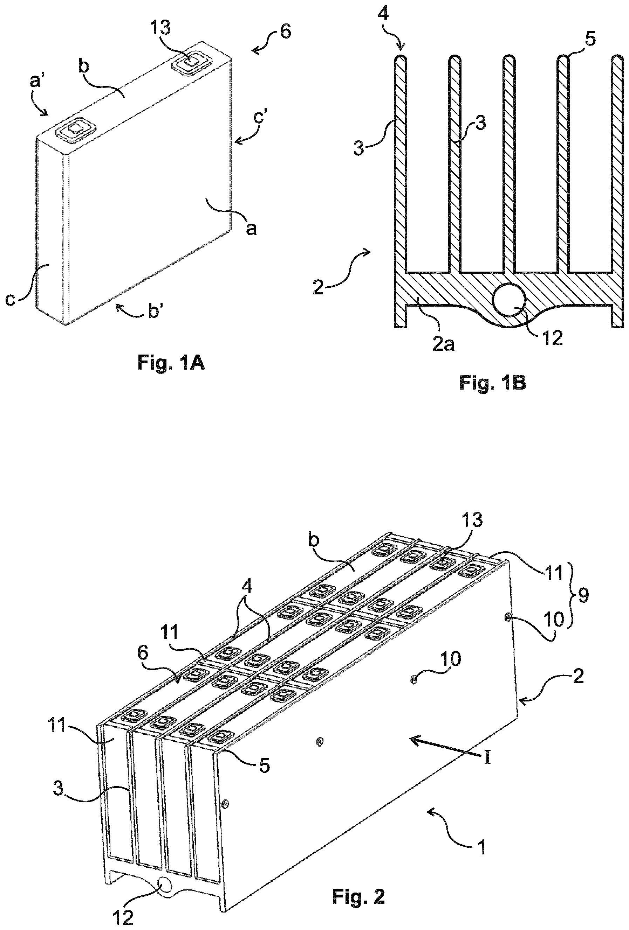

Figure 1A depicts a prismatic battery cell 6. The battery cell 6 of fig. 1 comprises six substantially flat faces (a, a', b, b', c, c'), each at a right angle to the neighboring faces. Two of the faces (termed side faces, a, a') are larger than the rest of the faces (b, b', c, c') and are in contact with the thermal transfer fins 3, when the battery cell 6 is inserted in the metal profile 2 to form a battery module 1. These side faces a, a' are responsible for the majority of the heat transfer between the battery cell 6 and the metal profile 2.

One of the smaller faces (top face, b) comprises the battery terminals 13, through which the battery cell 6 is recharged and discharged. The face opposite and parallel to the top face b is termed the bottom face b'. The bottom face b' is positioned towards a base portion 2a of the metal profile 2 between the thermal transfer fins 3 in the battery module 1. The bottom face b' may comprise glue, tape or other attachment means 14 for fastening the battery cell 6 to the metal profile 2. Alternatively, the attachment means 14 may be placed on the metal profile 2 before inserting the battery cell 6. The properties of the attachment means 14 preferably allow efficient heat transfer between the bottom face b' of the battery cell 6 and the base portion 2a of the metal profile 2.

The two remaining faces are termed end faces c, c'. The end faces c, c' in a battery module 1 may be free, if there is no battery cell 6 next to the end face c, c'. Alternatively, an end face c, c' may be adjacent to or contact an end face c, c' of a neighboring battery cell 6. If the battery module 1 comprises spacers 11, an end face c, c' may be adjacent to or contact a spacer 11.

Figure 1B depicts a cross section of a metal profile 2 in the direction of the arrow I in fig. 2. The metal profile comprises a base portion 2a and thermal transfer fins 3. Each thermal transfer fin comprises a tip 4 with an edge 5. In the embodiment of fig. 1B, the edges 5 of the tip 4 are rounded. Alternatively, the thermal transfer fins 3 could be slanted in the vicinity of the tip 4. A cross section of the channel for thermal transfer medium 12 is depicted in the base portion 2a of the metal profile. The design and number of the channels 12 may vary in different embodiments. The channels 12 may be interconnected. Different cooling media can be used, as is known to the skilled person.

In the embodiment of fig. 1B, the angle of a thermal transfer fin 3 and the base portion 2a the metal profile 2 is sharp. However, in an embodiment, the angle may be rounded. Further, although in the embodiment of fig. 1B, the thermal transfer fins 3 have a constant diameter, embodiments can be envisaged in which the thermal transfer fins 3 are thicker at the tip 4 than near the base portion 2a of the metal profile 2. Such a shape might contribute to the pressure-exerting effect of the thermal transfer fins 3 towards the battery cells 6.

Figure 2 shows a battery module 1 according to the current disclosure. The battery cells 6 are arranged in four rows of three between the thermal transfer fins 3. The top faces b are visible and the battery terminals 13 positioned thereon are available for contact. The embodiment of fig. 2 thus illustrates the possibility of placing several battery cells 6 next to each other, either end-to-end or side-by-side in one metal profile 2.

In the embodiment of fig. 2, the length of the thermal transfer fin 3 approximately equals the height of the battery cell 6 inserted in the metal profile 2. However, in some embodiments, the thermal transfer fins 3 might be shorter than the battery cell 6 inserted in the metal profile 2. For example, the length could be half of the length of the battery cell. In such an embodiment, the battery cells 6 could be enclosed inside two metal profiles 2.

The metal profile 2 comprises a channel 12 for the cooling medium. The tips 4 of the thermal transfer fins 3 have slightly rounded edges 5, but the tip 4 has a flat portion between the rounded edges.

The embodiment of a battery module 1 in fig. 2 comprises distance-adjusting means 9. The distance-adjusting means 9 comprises compressing means 10 and spacers 11. The spacers 11 are positioned between each battery cell 6 in a row of battery cells 6 placed end-to-end between two neighboring thermal transfer fins 3. A spacer 11 is positioned also at each end of the grooves between two neighboring thermal transfer fins 3. The dimensions of the spacers 11 match those of the groove, so that the spacer extends the whole length of the thermal transfer fin.

The distance-adjusting means in fig. 2 further comprises compressing means 10. The compressing means 10 in this embodiment is a rod extending through the thermal transfer fins 3 and the spacers 11. In this embodiment, each spacer 11 is traversed by one compressing means 10, and all the compressing means are on the same distance from the tip 4 of the thermal transfer fins 3. However, it is possible to have one spacer 11 traversed by more than one compressing means 10 positioned on different distances from the tip 4 of the thermal transfer fin 3. Further, also if each spacer 11 is traversed by one compressing means 11, the compressing means 10 may be positioned at variable distances from the tip 4 of the thermal transfer fin 3.

The details of the compressing means 10 are not depicted in fig. 2, but a threaded rod with corresponding tightening nuts is one alternative.

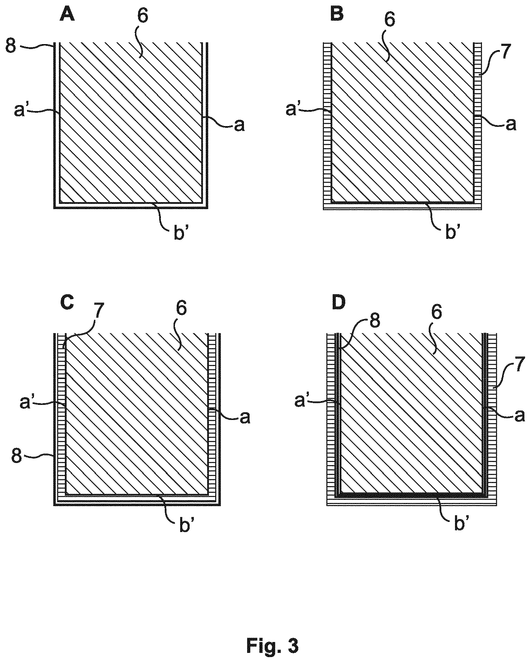

Figure 3 displays schematic partial cross sections of a prismatic battery cell 6 according to the present disclosure. It comprises the heat-conducting filler material 7 and/or the electrically insulating material 8. The figure is not drawn to proportion. The schematic drawing does not take the moldability of the heat-conducting filler material 7 into account. Thus, the heat-conducting filler material 7 is depicted as being of equal thickness, which in reality need not to be the case. Further, the electrically insulating material 8 and heat-conducting filler material 7 are depicted at a distance from each other for clarity. In reality, especially when under pressure between the thermal transfer fin 3 and the battery cell 6, the materials are pressed tightly against each other and against the battery cell 6.

The battery cell 6 is depicted with oblique hatching. The heat-conducting filler material 7 is depicted with horizontal hatching. The electrically insulating material 8 is depicted as a thicker line.

In panel A, the battery cell 6 comprises electrically insulating material 8. The electrically insulating material 8 surrounds the battery cell 6 from faces a, a' and b'. Although not visible in a cross section, the electrically insulating material 8 also covers end faces c and c'. The electrically insulating material 8 may be a film or comprise fiber material embedded with electrically insulating substance. The electrically insulating material 8 covering faces a and a' is positioned between the battery cell 6 and the thermal transfer fins 3, and the electrically insulating material 8 covering face b' is positioned between the battery cell 6 and the base portion 2a of the metal profile 2.

In panel B, the battery cell 6 comprises heat-conducting filler material 7. The heat-conducting filler material 7 surrounds the battery cell 6 from faces a, a' and b'. Although not visible in a cross section, the heat-conducting filler material 7 also covers end faces c and c'. The heat-conducting filler material 7 covering faces a and a' is positioned between the battery cell 6 and the thermal transfer fins 3, and the heat-conducting filler material 7 covering face b' is positioned between the battery cell 6 and the base portion 2a of the metal profile 2.

In panel C, the battery cell 6 comprises heat-conducting filler material 7 and electrically insulating material 8. The materials 7,8 surround the battery cell 6 from faces a, a' and b'. Although not visible in a cross section, the materials also cover end faces c and c'. The materials 7, 8 covering faces a and a' are positioned between the battery cell 6 and the thermal transfer fins 3, and the materials 7, 8 covering face b' are positioned between the battery cell 6 and the base portion 2a of the metal profile 2.

In the embodiment of panel C, the heat-conducting filler material 7 is positioned between the electrically insulating material 8 and the battery cell 6. The heat-conducting filler material 7 is, for example, coated on the battery cell 6 and subsequently covered by the electrically insulating material 8. When the battery cell 6 of panel C is inserted into a metal profile 2, the electrically insulating material 8 is positioned between the heat-conducting filler material 7 and the metal profile 2.

In panel D, an embodiment similar to that of panel C is depicted. However, in this embodiment, the electrically insulating material 8 is positioned between the heat-conducting filler material 7 and the battery cell 6. The electrically insulating material 8 is, for example, shrink-wrapped plastic film 8 covered with heat-conducting paste 7. When the battery cell 6 of panel D is inserted into a metal profile 2, the heat-conducting filler material 7 is positioned between the electrically insulating material 8 and the metal profile 2.

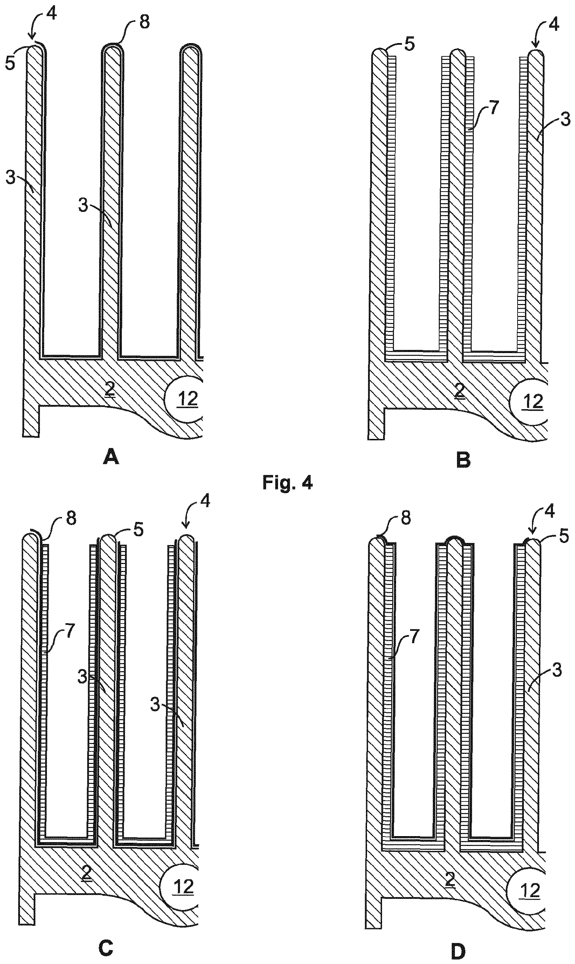

Figure 4 depicts partial cross-sectional views of a metal profile according to the present disclosure. It comprises the heat-conducting filler material 7 and/or the electrically insulating material 8. The figure is not drawn to proportion. A channel 12 for thermal transfer medium is partially presented in the figure.

The schematic drawing does not take the moldability of the heat-conducting filler material 7 into account. Thus, the heat-conducting filler material 7 is depicted as being of equal thickness, which in reality is not necessarily the case. Further, the electrically insulating material 8 and heat-conducting filler material 7 are depicted at a distance from each other for clarity. In reality, especially when under pressure between the thermal transfer fin 3 and the battery cell 6, the materials are pressed tightly against each other and against the battery cell 6.

Although only one point along the metal profile is depicted in a cross section of fig. 4, the materials 7, 8 extend substantially along the whole length of the metal profile 2.

The metal profile 2 is depicted with oblique hatching. The heat-conducting filler material 7 is depicted with horizontal hatching. The electrically insulating material 8 is depicted as a thicker line.

In panel A, the metal profile 2 comprises electrically insulating material 8. The electrically insulating material 8 is formed as a continuous layer over the thermal transfer fins 3 and the base portion 2a of the metal profile 2. The electrically insulating material 8 thus covers also the tips 4 of the thermal transfer fins 3 and their edges 5.

In panel B, the metal profile 2 comprises heat-conducting filler material 7. The heat-conducting filler material 7 is formed as a uniform layer covering the grooves formed by the thermal transfer fins 3 and the base portion 2a of the metal profile 2. Although in the schematic drawing of panel C, the heat-conducting filler material 7 is depicted as a uniform layer, in reality it might tend to ooze towards the bottom of the groove. However, a thin layer of solidifying polymer, for example, might be approximated by an even layer also in reality before the insertion of a battery cell 6 between the thermal transfer fins 3. When a battery cell 6 is inserted between the thermal transfer fins 3, the layer of heat-conducting filler material 7 changes shape as it conforms to the contours of the battery cell 6 and thermal transfer fin 3.

In panel C, the metal profile 2 comprises electrically insulating material 8 and heat-conducting filler material 8. In this embodiment, the layer of electrically insulating material 8 is not continuous. It only covers the covers the grooves formed by the thermal transfer fins 3 and the base portion 2a of the metal profile 2. The heat-conducting filler material 7 is coated over the electrically insulating material 8 similarly to the embodiment of panel B, in which the heat-conducting filler material 7 was coated over the metal profile 2.

When the battery cell 6 is inserted between the thermal transfer fins 3, the heat-conducting filler material 7 is positioned between the battery cell 6 and the electrically insulating material 8.

In panel D, an embodiment similar to that of panel C is depicted, except that the electrically insulating material 8 is continuous (as in panel A), and the electrically insulating material 8 is coated over the heat-conducting filler material 7. When the battery cell 6 is inserted between the thermal transfer fins 3, the electrically insulating material 8 is positioned between the battery cell 6 and the heat-conducting filler material 7.

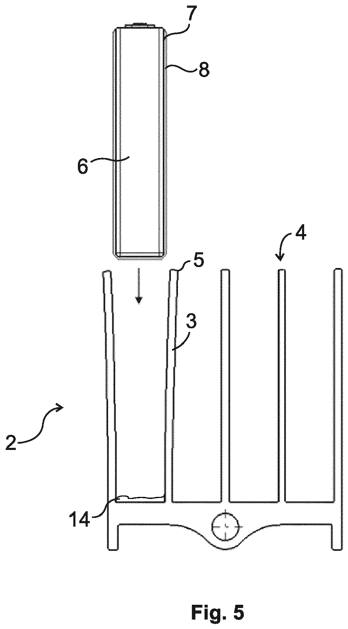

Figure 5 depicts an embodiment of the method of assembling a battery module according to the present disclosure. A battery cell 6 is coated with heat-conducting filler material 7 at step a). Then, a film of electrically insulating material 8 is coated on the battery cell at step b). In fig. 5, step c) of inserting the battery cell 6 between the thermal transfer fins 3 is being performed. Simultaneously, step ii) of bending two neighboring thermal transfer fins 3 away from each other for inserting a battery cell 6 is being performed.

Further, in fig. 5, glue 14 has been placed in the groove between two thermal transfer fins 3 for attaching the battery cell 6 in place.

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. A battery module (1) comprising
- a metal profile (2), the metal profile (2) being extruded aluminum or aluminum alloy provided with a plurality of thermal transfer fins (3) arranged at a space from each other, and
- a plurality of battery cells (6) mounted in said metal profile (2) between the thermal transfer fins (3) and in thermal contact with the thermal transfer fins (3),
**characterized in that** the thermal transfer fins (3) are configured to exert pressure on the battery cells (6), and **in that** the thermal contact between the thermal transfer fins (3) and the battery cells (6) is at least partly mediated by two material layers, one of which is heat-conducting filler material (7) layer being of viscous paste or a viscous gel, and another of which is electrically insulating material (8) layer being plastic film, the two material layers positioned between the thermal transfer fins (3) and the battery cells (6) for improving thermal transfer between the battery cells (6) and the thermal transfer fins (3), and that
a) the layer of heat-conducting filler material (7) being coated on the fin (3) and the layer of heat-conducting filler material (7) being coated by the electrically insulating material (8), or
b) the layer of heat-conducting filler material (7) being coated on the battery cells (6) and the layer of heat-conducting filler material (7) being coated by the electrically insulating material (8).

2. The battery module (1) according to claim 1, wherein the electrically insulating material (8) is positioned between the thermal transfer fins (3) and the heat-conducting filler material (7), or wherein the electrically insulating material (8) is positioned between the battery cell (6) and the heat-conducting filler material (7).

3. The battery module (1) according to claim 1 or 2, wherein the electrically insulating material (8) is positioned on all surfaces of the battery cells (6) which are configured to face the metal profile (2).

4. The battery module (1) according to any of the preceding claims, wherein the thickness of the heat-conducting filler material (7) is below 1 mm when assembling the battery module (1).

5. The battery module (1) according to any of the preceding claims, wherein the thickness of the electrically insulating material (8) is below 0.5 mm.

6. The battery module (1) according to any of the preceding claims, wherein the thermal transfer fins (3) comprise a tip (4) with edges (5), and the edges (5) are rounded for allowing smooth insertion of the battery cells (6) between the thermal transfer fins (3).

7. The battery module (1) according to any of the preceding claims, wherein the thermal transfer fins (3) are bendable for allowing smooth insertion of the battery cells (6) between the thermal transfer fins (3).

8. The battery module (1) according to any of the preceding claims, wherein the pressure exerted on the battery cells (6) by the thermal transfer fins (3) is regulated by distance-adjusting means (9), comprising compressing means (10) and/or spacers (11).

9. A method of assembling a battery module (1), **characterized in that** the method comprises, simultaneously or in any order, the steps of
a) coating a metal profile (2), wherein the metal profile is extruded aluminum or aluminum alloy and comprising a plurality of thermal transfer fins (3), or coating a plurality of battery cells (6), with a layer of heat-conducting filler material (7) being viscous paste or a viscous gel; and
coating the layer of heat-conducting filler material (7) with a layer of electrically insulating material (8) being plastic film; wherein the method comprises the further step of
b) inserting the battery cells (6) into the metal profile (2) between the thermal transfer fins (3).

10. The method according to claim 9, wherein the method further comprises the step of
ii) bending two neighboring thermal transfer fins (3) away from each other for inserting a battery cell (6) therebetween
during step c).

## Patentansprüche

1. Batteriemodul (1), umfassend
- ein Metallprofil (2), wobei das Metallprofil (2) stranggepresstes Aluminium oder Aluminiumlegierung ist, das mit einer Vielzahl von Wärmeübertragungsrippen (3) versehen ist, die in einem Abstand voneinander angeordnet sind, und
- eine Vielzahl von Batteriezellen (6), die in dem Metallprofil (2) zwischen den Wärmeübertragungsrippen (3) und in Wärmekontakt mit den Wärmeübertragungsrippen (3) angebracht sind,
**dadurch gekennzeichnet, dass** die Wärmeübertragungsrippen (3) eingerichtet sind, Druck auf die Batteriezellen (6) auszuüben, und dass der Wärmekontakt zwischen den Wärmeübertragungsrippen (3) und den Batteriezellen (6) zumindest teilweise durch zwei Materiallagen vermittelt ist, wobei eine davon eine wärmeleitende Füllmateriallage (7) aus einer viskosen Paste oder einem viskosen Gel ist, und eine andere davon eine elektrisch isolierende Materiallage (8) aus einem Kunststoffilm ist, wobei die zwei Materiallagen zwischen den Wärmeübertragungsrippen (3) und den Batteriezellen (6) zum Verbessern von Wärmeübertragung zwischen den Batteriezellen (6) und den Wärmeübertragungsrippen (3) angeordnet sind, und dass
a) die Lage aus wärmeleitendem Füllmaterial (7) auf die Rippe (3) aufgebracht ist und die Lage aus wärmeleitendem Füllmaterial (7) mit dem elektrisch isolierenden Material (8) überzogen ist, oder
b) die Lage aus wärmeleitendem Füllmaterial (7) auf die Batteriezellen (6) aufgebracht ist und die Lage aus wärmeleitendem Füllmaterial (7) mit dem elektrisch isolierenden Material (8) überzogen ist.

2. Batteriemodul (1) nach Anspruch 1, wobei das elektrisch isolierende Material (8) zwischen den Wärmeübertragungsrippen (3) und dem wärmeleitenden Füllmaterial (7) angeordnet ist, oder wobei das elektrisch isolierende Material (8) zwischen der Batteriezelle (6) und dem wärmeleitenden Füllmaterial (7) angeordnet ist.

3. Batteriemodul (1) nach Anspruch 1 oder 2, wobei das elektrisch isolierende Material (8) auf allen Oberflächen der Batteriezellen (6) angeordnet ist, die eingerichtet sind, dem Metallprofil (2) zugewandt zu sein.

4. Batteriemodul (1) nach einem der vorangehenden Ansprüche, wobei die Dicke des wärmeleitenden Füllmaterials (7) beim Zusammenbau des Batteriemoduls (1) unter 1 mm liegt.

5. Batteriemodul (1) nach einem der vorangehenden Ansprüche, wobei die Dicke des elektrisch isolierenden Materials (8) unter 0,5 mm liegt.

6. Batteriemodul (1) nach einem der vorangehenden Ansprüche, wobei die Wärmeübertragungsrippen (3) eine Spitze (4) mit Kanten (5) aufweisen und die Kanten (5) abgerundet sind, um einfaches Einsetzen der Batteriezellen (6) zwischen den Wärmeübertragungsrippen (3) zu ermöglichen.

7. Batteriemodul (1) nach einem der vorangehenden Ansprüche, wobei die Wärmeübertragungsrippen (3) biegbar sind, um einfaches Einsetzen der Batteriezellen (6) zwischen den Wärmeübertragungsrippen (3) zu ermöglichen.

8. Batteriemodul (1) nach einem der vorangehenden Ansprüche, wobei der durch die Wärmeübertragungsrippen (3) auf die Batteriezellen (6) ausgeübte Druck durch ein Abstandanpassungsmittel (9) reguliert wird, umfassend ein Kompressionsmittel (10) und/oder Abstandshalter (11).

9. Verfahren des Zusammenbauens eines Batteriemoduls (1), **dadurch gekennzeichnet, dass** das Verfahren, gleichzeitig oder in beliebiger Reihenfolge, die Schritte umfasst des:
a) Überziehens eines Metallprofils (2), wobei das Metallprofil stranggezogenes Aluminium oder eine Aluminiumlegierung ist und eine Vielzahl von Wärmeübertragungsrippen (3) umfasst, oder Überziehens einer Vielzahl von Batteriezellen (6) mit einer Lage aus wärmeleitendem Füllmaterial (7), das eine viskose Paste oder ein viskoses Gel ist; und
Überziehens der Lage aus wärmeleitendem Füllmaterial (7) mit einer Lage aus elektrisch isolierendem Material (8), das ein Kunststofffilm ist; wobei das Verfahren den weiteren Schritt umfasst des:
b) Einsetzens der Batteriezellen (6) in das Metallprofil (2) zwischen den Wärmeübertragungsrippen (3).

10. Verfahren nach Anspruch 9, wobei das Verfahren ferner den Schritt umfasst des:
ii) Biegens zweier benachbarter Wärmeübertragungsrippen(3) voneinander weg zum Einsetzen einer Batteriezelle (6) dazwischen
während Schritt c).

## Revendications

1. Module de batterie (1) comprenant
- un profilé métallique (2), le profilé métallique (2) étant en aluminium ou alliage d'aluminium extrudé doté d'une pluralité d'ailettes de transfert thermique (3) disposées en étant espacées les unes des autres, et
- une pluralité de cellules de batterie (6) montées dans ledit profilé métallique (2) entre les ailettes de transfert thermique (3) et en contact thermique avec les ailettes de transfert thermique (3),
**caractérisé en ce que** les ailettes de transfert thermique (3) sont configurées pour exercer une pression sur les cellules de batterie (6), et **en ce que** le contact thermique entre les ailettes de transfert thermique (3) et les cellules de batterie (6) est à médiation au moins partielle par deux couches de matériau, dont l'une est une couche de matériau de remplissage thermiquement conducteur (7) qui est en une pâte visqueuse ou un gel visqueux, et dont l'autre est une couche de matériau électriquement isolant (8) qui est un film plastique, les deux couches de matériau étant positionnées entre les ailettes de transfert thermique (3) et les cellules de batterie (6) pour améliorer le transfert thermique entre les cellules de batterie (6) et les ailettes de transfert thermique (3), et **en ce que**
a) la couche de matériau de remplissage thermiquement conducteur (7) est déposée sous forme de revêtement sur l'ailette (3) et la couche de matériau de charge thermiquement conducteur (7) est revêtue du matériau électriquement isolant (8), ou
b) la couche de matériau de remplissage thermiquement conducteur (7) est déposée sous forme de revêtement sur les cellules de batterie (6) et la couche de matériau de charge thermiquement conducteur (7) est revêtue du matériau électriquement isolant (8).

2. Module de batterie (1) selon la revendication 1, dans lequel le matériau électriquement isolant (8) est positionné entre les ailettes de transfert thermique (3) et le matériau de remplissage thermiquement conducteur (7), ou dans lequel le matériau électriquement isolant (8) est positionné entre la cellule de batterie (6) et le matériau de remplissage thermiquement conducteur (7).

3. Module de batterie (1) selon la revendication 1 ou 2, dans lequel le matériau électriquement isolant (8) est positionné sur toutes les surfaces des cellules de batterie (6) qui sont configurées pour faire face au profilé métallique (2).

4. Module de batterie (1) selon l'une quelconque des revendications précédentes, dans lequel l'épaisseur du matériau de remplissage thermiquement conducteur (7) est inférieure à 1 mm lors de l'assemblage du module de batterie (1).

5. Module de batterie (1) selon l'une quelconque des revendications précédentes, dans lequel l'épaisseur du matériau électriquement isolant (8) est inférieure à 0,5 mm.

6. Module de batterie (1) selon l'une quelconque des revendications précédentes, dans lequel les ailettes de transfert thermique (3) comprennent une pointe (4) avec des bords (5), et les bords (5) sont arrondis pour permettre une insertion en douceur des cellules de batterie (6) entre les ailettes de transfert thermique (3).

7. Module de batterie (1) selon l'une quelconque des revendications précédentes, dans lequel les ailettes de transfert thermique (3) sont pliables pour permettre une insertion en douceur des cellules de batterie (6) entre les ailettes de transfert thermique (3) .

8. Module de batterie (1) selon l'une quelconque des revendications précédentes, dans lequel la pression exercée sur les cellules de batterie (6) par les ailettes de transfert thermique (3) est régulée par des moyens d'ajustement de distance (9), comprenant des moyens de compression (10) et/ou des écarteurs (11).

9. Procédé d'assemblage d'un module de batterie (1), **caractérisé en ce que** le procédé comprend, simultanément ou dans un ordre quelconque, les étapes de
a) revêtement d'un profilé métallique (2), lequel profilé métallique est en aluminium ou alliage d'aluminium extrudé doté d'une pluralité d'ailettes de transfert thermique (3), ou revêtement d'une pluralité de cellules de batterie (6) avec une couche de matériau de remplissage thermiquement conducteur (7) qui est une pâte visqueuse ou un gel visqueux ; et revêtement de la couche de matériau de charge thermiquement conducteur (7) avec une couche de matériau électriquement isolant (8) qui est un film plastique ;
lequel procédé comprend l'étape supplémentaire de
b) insertion des cellules de batterie (6) dans le profilé métallique (2) entre les ailettes de transfert thermique (3).

10. Procédé selon la revendication 9, lequel procédé comprend en outre l'étape de
ii) pliage de deux ailettes de transfert thermique voisines (3) à distance l'une de l'autre pour insérer une cellule de batterie (6) entre elles durant l'étape c) .
